# EUROPEAN PATENT SPECIFICATION

(11) **EP 3 761 390 B1**
(45) Date of publication and mention of the grant of the patent: **15.05.2024**
(21) Application number: 19193220.1
(22) Date of filing: 23.08.2019
(51) Int. Cl.: H01M 50/204, H01M 50/505, H01M 50/522

(54) **CONNECTING ASSEMBLY AND BATTERY PACK**
VERBINDUNGSANORDNUNG UND BATTERIEPACK
ENSEMBLE DE CONNEXION ET BLOC-BATTERIE

(30) Priority: 05.07.2019 CN 201921051788 U
(43) Date of publication of application: 06.01.2021
(73) Proprietor: Jiangsu Contemporary Amperex Technology Limited, Liyang, Jiangsu 213300 (CN); Contemporary Amperex Technology Co., Limited, Jiaocheng District Ningde City, Fujian 352100 (CN)
(72) Inventor: ZHANG, Fan, Liyang, Jiangsu 213300 (CN); DAI, Xiaoshan, Liyang, Jiangsu 213300 (CN); CHEN, Yuchao, Liyang, Jiangsu 213300 (CN)
(74) Representative: Ran, Handong

(56) References cited:
- EP-A1- 3 490 025
- CN-A- 105 957 591
- JP-A- 2013 062 103

## Description

### RELATED APPLICATIONS

The present application claims priority to Chinese patent application No. CN201921051788.3, filed on July 5, 2019.

### FIELD OF THE PRESENT INVENTION

The present invention relates to the field of battery technology, and particularly relates to a connecting assembly and a battery pack.

### BACKGROUND OF THE PRESENT INVENTION

With the development of the new energy automobile industry, the capacity and voltage of the battery pack are getting higher and higher, and the arrangement of the battery pack is becoming more and more compact. Correspondingly, requirement on the insulation withstand-voltage reliability of the busbar inside the battery pack is also getting higher and higher. At present, in order to ensure the insulation withstand-voltage reliability of the busbar, an integral heat shrinkable tube is usually sheathed on the busbar, or an insulating layer is disposed on the whole outside of the busbar by a powder spraying, dip molding or extrusion process.

However, because the busbar inside the battery pack has a relative long length, a complicated extension, and has various forms such as a horizontal bending structure, a vertical bending structure, a twisting structure and the like, and when the busbar is insulated with the integral heat shrinkable tube, because the integral heat shrinkable tube at the bending position of the busbar easily generates the defects such as whiteness, wrinkles, air bubbles, tearing and the like, so that it can not meet the insulation withstand-voltage reliability requirement of the battery pack; when the busbar is insulated by the powder spraying, dip molding or extrusion process, the material cost and process cost are high. The features of the preamble of the independent claim are known from CN 105 957 591 A. Related technology are known from JP 2013 062103 A and EP 3 490 025 Al.

### SUMMARY OF THE PRESENT INVENTION

In view of the problem existing in the background, an object of the present invention is to provide a connecting assembly and a battery pack, the structure of the connecting assembly is simple, the manufacturing cost of the connecting assembly is low, and the insulation withstand-voltage reliability of the connecting assembly is high, when the connecting assembly is applied in the battery pack, the connecting assembly can meet the insulation withstand-voltage reliability requirement of the battery pack. The present invention is defined in the independent claim.

In order to achieve the above object, the present invention provides a connecting assembly, which comprises a busbar, a first insulating sleeve, a second insulating sleeve and a third insulating sleeve. The busbar comprises a main body portion, an extending portion, and a bent connection portion, the bent connection portion connects the main body portion and the extending portion. The first insulating sleeve covers the main body portion of the busbar. The second insulating sleeve covers the extending portion of the busbar. The third insulating sleeve comprises a first covering portion, and the first covering portion covers the bent connection portion of the busbar.

The first insulating sleeve, the second insulating sleeve and the third insulating sleeve each are a heat shrinkable tube.

The third insulating sleeve is wholly located between the first insulating sleeve and the second insulating sleeve.

The third insulating sleeve further comprises a second covering portion, and the second covering portion is connected to the first covering portion and covers a part of the first insulating sleeve.

The third insulating sleeve further comprises a third covering portion, and the third covering portion is connected to the first covering portion and covers a part of the second insulating sleeve.

The extending portion is formed as a rectangular structure. Correspondingly, the second insulating sleeve is also formed as a rectangular structure, and the second insulating sleeve covers a part of the extending portion.

The extending portion comprises a straight section, a bent connection section and an extending section, the straight section is connected to the bent connection portion, the bent connection section connects the straight section and the extending section. The second insulating sleeve comprises a fourth covering portion and a fifth covering portion, the fourth covering portion covers the straight section of the extending portion, the fifth covering portion covers the bent connection section of the extending portion.

The busbar further comprises a connecting hole, and the connecting hole is provided through the extending portion.

The present invention further provides a battery pack, which comprises a first battery module, a second battery module and the connecting assembly described above, the first battery module is electrically connected to the second battery module via the connecting assembly.

The first battery module comprises a plurality of first batteries, a first output connecting piece and a first end plate, and one end of the first output connecting piece is electrically connected to the plurality of first batteries, the other end of the first output connecting piece is supported on the first end plate and electrically connected to the busbar. The second battery module comprises a plurality of second batteries, a second output connecting piece and a second end plate, and one end of the second output connecting piece is electrically connected to the plurality of second batteries, the other end of the second output connecting piece is supported on the second end plate and electrically connected to the busbar.

The present invention has the following beneficial effects: in the connecting assembly, because the first insulating sleeve, the second insulating sleeve and the third insulating sleeve are independent components, and the first insulating sleeve, the second insulating sleeve and the third insulating sleeve segmentally cover different parts of the busbar, so that the first insulating sleeve, the second insulating sleeve and the third insulating sleeve each have a shorter length and less portion required to be bent, thereby facilitating the first insulating sleeve, the second insulating sleeve and the third insulating sleeve to be respectively sheathed on the different parts of the busbar, therefore the structure of the first insulating sleeve, the second insulating sleeve and the third insulating sleeve are simplified, and the manufacturing cost is greatly reduced. After the first insulating sleeve, the second insulating sleeve and the third insulating sleeve to be respectively sheathed on the different parts of the busbar, because the first insulating sleeve, the second insulating sleeve and the third insulating sleeve each have insulation property, and the first insulating sleeve, the second insulating sleeve and the third insulating sleeve each have a shorter length and less portion required to be bent, in the process that the different parts of the busbar are respectively sheathed with the first insulating sleeve, the second insulating sleeve and the third insulating sleeve, it reduces the wearing of the first insulating sleeve, the second insulating sleeve and the third insulating sleeve caused by the busbar, thereby improving the insulation withstand-voltage reliability of the entire connecting assembly, and in turn ensuring that the connecting assembly satisfies the insulation withstand-voltage reliability requirement of the battery pack.

### BRIEF DESCRIPTION OF THE DRAWINGS

FIG. 1 is a perspective view of a battery pack of the present invention.
FIG. 2 is a perspective view of a connecting assembly of FIG. 1.
FIG. 3 is a schematic view showing a position relationship of a busbar, a first insulating sleeve, a second insulating sleeve and a third insulating sleeve of the connecting assembly.
FIG. 4 is a perspective view of the third insulating sleeve and the busbar of FIG. 2 before assembling, in which the first insulating sleeve and the second insulating sleeve have been mounted on the busbar.
FIG. 5 is a perspective view of the busbar.
FIG. 6 is a variation of FIG. 1.
FIG. 7 is another variation of FIG. 1.

Reference numerals in figures are represented as follows:
1 connecting assembly
   11 busbar
      111 main body portion
      112 extending portion
         112A straight section
         112B bent connection section
         112C extending section
      113 bent connection portion
      114 connecting hole
   12 first insulating sleeve
   13 second insulating sleeve
      131 fourth covering portion
      132 fifth covering portion
   14 third insulating sleeve
      141 first covering portion
      142 second covering portion
      143 third covering portion
2 first battery module
   21 first output connecting piece
   22 first end plate
3 second battery module
   31 second output connecting piece
   32 second end plate
X transversal direction
Y longitudinal direction
Z up-down direction

### DETAILED DESCRIPTION

To make the object, technical solutions, and advantages of the present invention more apparent, hereinafter the present invention will be further described in detail in combination with the accompanying figures and the embodiments. It should be understood that the specific embodiments described herein are merely used to explain the present invention but are not intended to limit the present invention.

In the description of the present invention, unless otherwise specifically defined and limited, the terms "first", "second", "third" and the like are only used for illustrative purposes and are not to be construed as expressing or implying a relative importance; the term "plurality" means two or more; the terms "connect" should be broadly interpreted, for example, the term "connect" can be "fixedly connect", "detachably connect", "integrally connect", "electrically connect" or "signal connect". The term "connect" also can be "directly connect" or "indirectly connect via a medium". For the person skilled in the art, the specific meanings of the abovementioned terms in the present invention can be understood according to the specific situation.

In the description of the present invention, it should be understood that spatially relative terms, such as "above", "below" and the like, are described based on orientations illustrated in the figures, but are not intended to limit the embodiments of the present invention. Hereinafter the present invention will be further described in detail in combination with the figures.

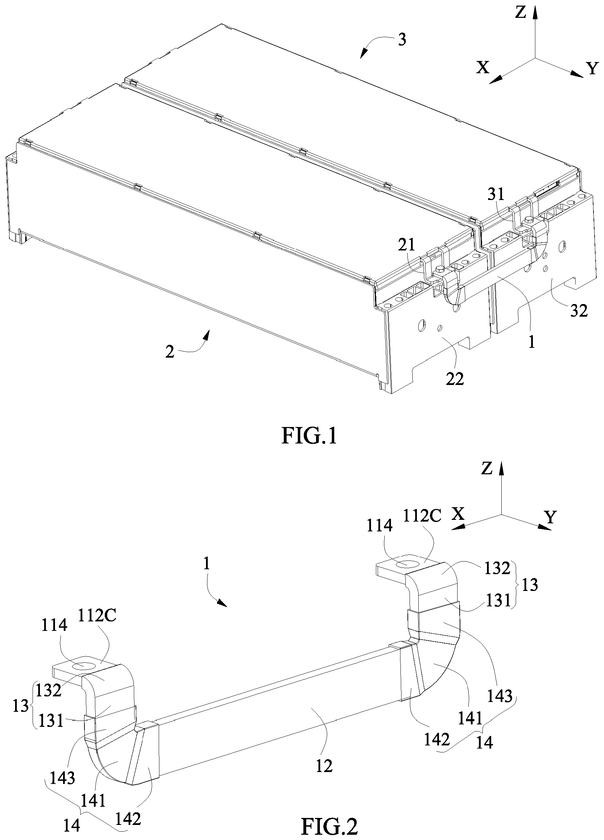

Referring to FIG. 1, a battery pack of the present invention may comprise a connecting assembly 1, a first battery module 2 and a second battery module 3. The first battery module 2 and the second battery module 3 are arranged side by side in a transversal direction X, and the first battery module 2 is electrically connected to the second battery module 3 via the connecting assembly 1.

Referring to FIG. 2 to FIG. 7, the connecting assembly 1 may comprise a busbar 11, a first insulating sleeve 12, a second insulating sleeve 13 and a third insulating sleeve 14.

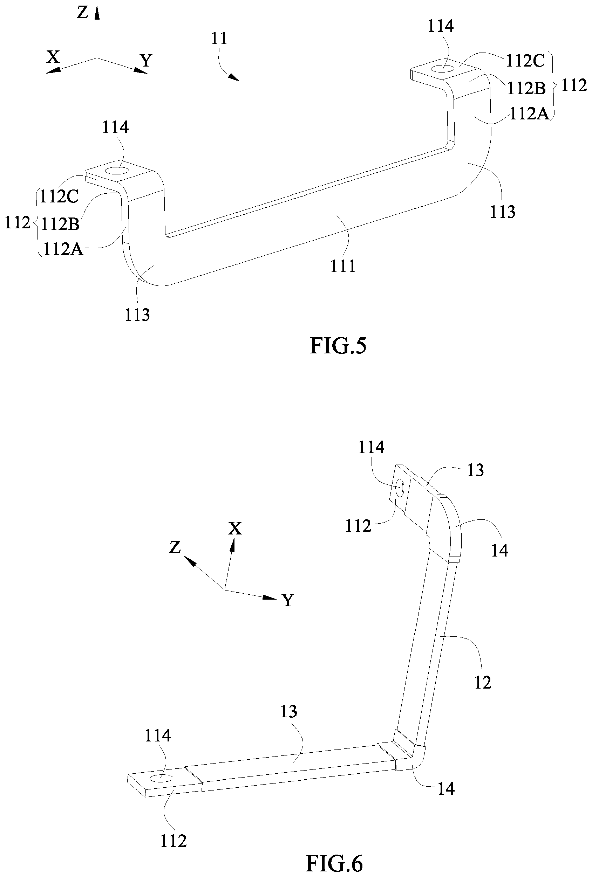

The busbar 11 may be made of a conductive material such as copper, aluminum, nickel, and alloys thereof. Referring to FIG. 5, the busbar 11 may comprise a main body portion 111, an extending portion 112, a bent connection portion 113 and a connecting hole 114. The bent connection portion 113 connects the main body portion 111 and the extending portion 112, and the connecting hole 114 is provided through the extending portion 112.

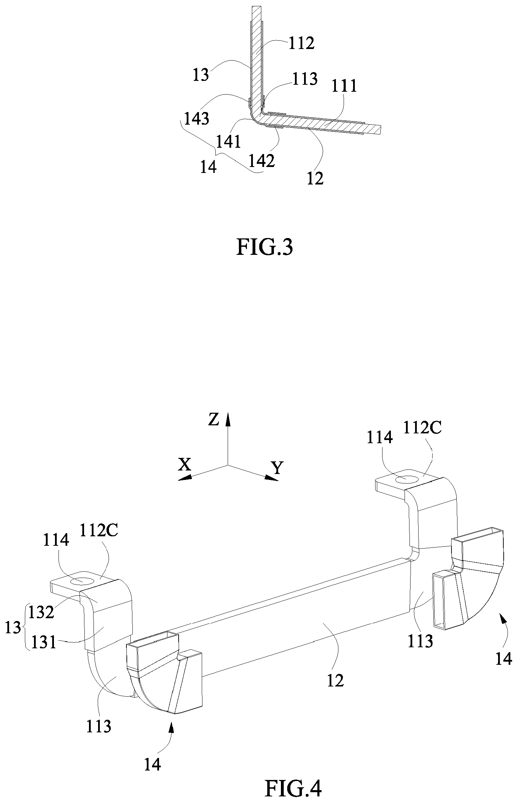

Referring to FIG. 2 and FIG. 4, the first insulating sleeve 12 covers the main body portion 111 of the busbar 11. The second insulating sleeve 13 covers the extending portion 112 of the busbar 11. The third insulating sleeve 14 may comprise a first covering portion 141, and the first covering portion 141 covers the bent connection portion 113 of the busbar 11.

In the connecting assembly 1, because the first insulating sleeve 12, the second insulating sleeve 13 and the third insulating sleeve 14 are independent components, and the first insulating sleeve 12, the second insulating sleeve 13 and the third insulating sleeve 14 segmentally cover different parts of the busbar 11, so that the first insulating sleeve 12, the second insulating sleeve 13 and the third insulating sleeve 14 each have a shorter length and less portion required to be bent, thereby facilitating the first insulating sleeve 12, the second insulating sleeve 13 and the third insulating sleeve 14 to be respectively sheathed on the different parts of the busbar 11, therefore the structure of the first insulating sleeve 12, the second insulating sleeve 13 and the third insulating sleeve 14 are simplified, and the manufacturing cost is greatly reduced.

After the first insulating sleeve 12, the second insulating sleeve 13 and the third insulating sleeve 14 to be respectively sheathed on the different parts of the busbar 11, because the first insulating sleeve 12, the second insulating sleeve 13 and the third insulating sleeve 14 each have insulation property, and the first insulating sleeve 12, the second insulating sleeve 13 and the third insulating sleeve 14 each have a shorter length and less portion required to be bent, in the process that the different parts of the busbar 11 are respectively sheathed with the first insulating sleeve 12, the second insulating sleeve 13 and the third insulating sleeve 14, it reduces the wearing of the first insulating sleeve 12, the second insulating sleeve 13 and the third insulating sleeve 14 caused by the busbar 11, thereby improving the insulation withstand-voltage reliability of the entire connecting assembly 1, and in turn ensuring that the connecting assembly 1 satisfies the insulation withstand-voltage reliability requirement of the battery pack.

The first insulating sleeve 12, the second insulating sleeve 13 and the third insulating sleeve 14 all may be made of an insulating material. Specifically, the insulating material may be PVC, the resin of ABS, EVA or PET. It should be noted that, the materials of the first insulating sleeve 12, the second insulating sleeve 13 and the third insulating sleeve 14 may be the same or different, as long as they meet the requirement of insulation use.

Because the heat shrinkable tube has a special property of heat shrinkage and is convenient to use, the first insulating sleeve 12, the second insulating sleeve 13 and the third insulating sleeve 14 each may be a heat shrinkable tube. The process that the different parts of the busbar 11 are respectively sheathed with the first insulating sleeve 12, the second insulating sleeve 13 and the third insulating sleeve 14 is described as follows.

When the first insulating sleeve 12 and the second insulating sleeve 13 are in a cooling state, firstly the first insulating sleeve 12 is sheathed on the main body portion 111 of the busbar 11, the second insulating sleeve 13 is sequentially sheathed on the extending portion 112 of the busbar 11, and then the first insulating sleeve 12 and the second insulating sleeve 13 are heated to make them shrunk in place; then, when the third insulating sleeve 14 is in a cooling state, firstly the third insulating sleeve 14 is sheathed on the bent connection portion 113 of the busbar 11, and then the third insulating sleeve 14 is heated to make it shrunk in place. Thus, the first insulating sleeve 12, the second insulating sleeve 13 and the third insulating sleeve 14 all are sheathed on the busbar 11 in place.

Referring to FIG. 2, FIG. 4 and FIG. 5, the main body portion 111 of the busbar 11 extends in the transversal direction X and is formed as a rectangular structure (i.e., the parts of the main body portion 111 are equal in cross-sectional area), and the thickness direction of the main body portion 111 is the longitudinal direction Y, the width direction of the main body portion 111 is the up-down direction Z. Correspondingly, the first insulating sleeve 12 is also formed as a rectangular structure (i.e., the parts of the first insulating sleeve 12 are equal in cross-sectional area). Here, because the parts of the first insulating sleeve 12 in cross-sectional area are uniform and the structure of the first insulating sleeve 12 is simple, therefore it facilitates the first insulating sleeve 12 to be sheathed on the main body portion 111, and there is no wrinkles and air bubbles when the first insulating sleeve 12 shrinks, thereby ensuring the insulation withstand-voltage reliability of the main body portion 111.

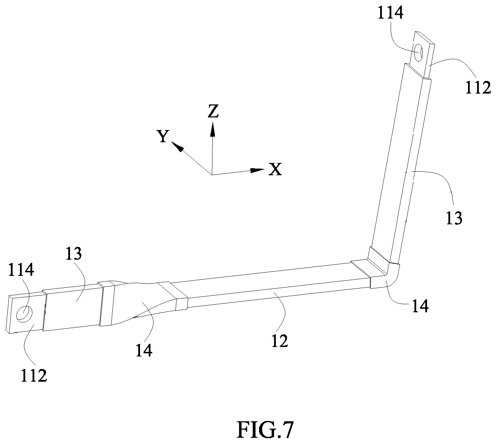

The extending portion 112 of the busbar 11 may be formed as a rectangular structure (as shown in FIG. 6 and FIG. 7). Correspondingly, the second insulating sleeve 13 may also be formed as a rectangular structure (i.e., the parts of the second insulating sleeve 13 are equal in cross-sectional area), and the second insulating sleeve 13 covers a part of the extending portion 112. In other words, a part of the extending portion 112 extends out of the second insulating sleeve 13. The connecting hole 114 is provided through the part of the extending portion 112 extending out of the second insulating sleeve 13, so that the busbar 11 connects the first battery module 2 and the second battery module 3 with the connecting hole 114. Here, because the parts of the second insulating sleeve 13 in cross-sectional area are uniform, and the structure of the second insulating sleeve 13 is simple, therefore it facilitates the second insulating sleeve 13 to be sheathed on the extending portion 112, and there is no wrinkles and air bubbles when the second insulating sleeve 13 shrinks, thereby ensuring the insulation withstand-voltage reliability of the extending portion 112.

The extending portion 112 of the busbar 11 may comprise a straight section 112A, a bent connection section 112B, and an extending section 112C (i.e., the extending portion 112 is formed as a L-shaped structure). The straight section 112A is directly connected to the bent connection portion 113, and the bent connection section 112B connects the straight section 112A and the extending section 112C. Correspondingly, the second insulating sleeve 13 may comprise a fourth covering portion 131 and a fifth covering portion 132, the fourth covering portion 131 covers the straight section 112A of the extending portion 112, and the fifth covering portion 132 covers the bent connection section 112B of the extending portion 112. The connecting hole 114 penetrates the extending section 112C of the extending portion 112, so that the busbar 11 connects the first battery module 2 and the second battery module 3 with the connecting hole 114.

Here, because the second insulating sleeve 13 only covers the straight section 112A and the bent connection section 112B of the extending portion 112, the length of the second insulating sleeve 13 is shorter and it facilitates the second insulating sleeve 13 to be sheathed on the extending portion 112, and the second insulating sleeve 13 receives less resistance when the second insulating sleeve 13 shrinks, thereby improving the shrink effect of the second insulating sleeve 13, therefore it ensures the insulation withstand-voltage reliability of the extending portion 112.

The extending portion 112 of the busbar 11 may be provided as two in number. Referring to FIG. 5, the straight section 112A of the extending portion 112 may extend in the up-down direction Z, and the extending section 112C may extend in the longitudinal direction Y. Based on the different bending direction of the bent connection section 112B with respect to the straight section 112A, the bent connection section 112B of the extending portion 112 may be formed as a horizontal bending structure, a vertical bending structure or a twisting structure.

The bent connection portion 113 of the busbar 11 and the second insulating sleeve 13 are identical to the extending portion 112 in number. Based on the different bending direction of the bent connection portion 113 with respect to the main body portion 111, the bent connection portion 113 may be formed as a horizontal bending structure, a vertical bending structure or a twisting structure. However, regardless what kind structure form of the bent connection portion 113 is formed, the structure of the third insulating sleeve 14 is always consistent with the structure of the bent connection portion 113.

Hereinafter the bent connection portion 113 will be taken as an example, and the specific structural forms of the horizontal bending structure, the vertical bending structure and the twisting structure will be described in combination with the corresponding figures.

When the main body portion 111 of the busbar 11 is a rectangular structure, the main body portion 111 has a large surface and a narrow surface, and the bent connection portion 113 may be bent with respect to the large surface of the main body portion 111 to form the horizontal bending structure (the structure shown by the bent connection portion 113 located at the lower side in FIG. 6 and the bent connection portion 113 located at the right side in FIG. 7 ); the bent connection portion 113 may be bent with respect to the narrow surface of the main body portion 111 to form the vertical bending structure (the structure shown by the bent connection portion 113 located at the upper side in FIG. 6 and the bent connection portion 113 in FIG. 5); the bent connection portion 113 may also be twisted with respect to the large surface and the narrow surface of the main body portion 111 to form the twisting structure (the structure shown by the bent connection portion 113 located at the left side in FIG. 7).

Because the third insulating sleeve 14 only covers the bent connection portion 113 of the busbar 11, the length of the third insulating sleeve 14 is shorter and it facilitates the third insulating sleeve 14 to be sheathed on the bent connection portion 113, and the third insulating sleeve 14 receives less resistance when the third insulating sleeve 14 shrinks, thereby improving the shrink effect of the third insulating sleeve 14, therefore it ensures the insulation withstand-voltage reliability of the bent connection portion 113.

The third insulating sleeve 14 may be wholly located between the first insulating sleeve 12 and the second insulating sleeve 13 (i.e., the third insulating sleeve 14 only covers the bent connection portion 113 of the busbar 11). At this time, in order to ensure the whole insulation withstand-voltage reliability of the connecting assembly 1, the third insulating sleeve 14 can be hermetically spliced together with the first insulating sleeve 12 and the second insulating sleeve 13 under the action of heat. The inner diameter of the first covering portion 141 is equal to the inner diameter of the first insulating sleeve 12 and the inner diameter of the second insulating sleeve 13.

Referring to FIG. 2 to FIG. 4, the third insulating sleeve 14 may further comprise a second covering portion 142, and the second covering portion 142 is connected to the first covering portion 141 and covers a part of the first insulating sleeve 12. At this time, the inner diameter of the second covering portion 142 is larger than the inner diameter of the first insulating sleeve 12. Because the second covering portion 142 of the third insulating sleeve 14 has a certain length of overlap with the first insulating sleeve 12, the insulation withstand-voltage reliability of them at the joint are improved; and at the same time, because the second covering portion 142 covers the part of the first insulating sleeve 12, there is a gap between the first covering portion 141 and the bent connection portion 113, thereby reducing the friction between the first covering portion 141 and the busbar 11, thus the first covering portion 141 can produce a greater degree of shrink, so that the first covering portion 141 does not cause the phenomena of whiteness and tearing, thereby ensuring the whole insulation withstand-voltage reliability of the connecting assembly 1.

Referring to FIG. 2 to FIG. 4, the third insulating sleeve 14 may further comprise a third covering portion 143, and the third covering portion 143 is connected to the first covering portion 141 and covers a part of the second insulating sleeve 13. At this time, the inner diameter of the third covering portion 143 is larger than the inner diameter of the second insulating sleeve 13. Because the third covering portion 143 of the third insulating sleeve 14 has a certain length of overlap with the second insulating sleeve 13, the insulation withstand-voltage reliability of them at the joint is improved; and at the same time, because the third covering portion 143 covers the part of the second insulating sleeve 13, so that there is a gap between the first covering portion 141 and the bent connection portion 113, thereby reducing the friction between the first covering portion 141 and the busbar 11, thus the first covering portion 141 can produce a greater degree of shrink, so that the first covering portion 141 does not cause the phenomena of whiteness and tearing, thereby ensuring the insulation whole withstand-voltage reliability of the connecting assembly 1.

Referring to FIG. 1, the first battery module 2 may comprise a plurality of first batteries, a first output connecting piece 21 and a first end plate 22, and one end of the first output connecting piece 21 is electrically connected to the plurality of first batteries, the other end of the first output connecting piece 21 is supported on the first end plate 22 and electrically connected to one extending portion 112 of the busbar 11. The connecting assembly 1 can also be used to realize the series and/or parallel connection between the plurality of first batteries.

Referring to FIG. 1, the second battery module 3 may comprise a plurality of second batteries, a second output connecting piece 31 and a second end plate 32, and one end of the second output connecting piece 31 is electrically connected to the plurality of second batteries, the other end of the second output connecting piece 31 is supported on the second end plate 32 and electrically connected to another extending portion 112 of the busbar 11. The connecting assembly 1 can also be used to realize the series and/or parallel connection between the plurality of second batteries.

## Claims

1. A connecting assembly (1), comprising a busbar (11), a first insulating sleeve (12), a second insulating sleeve (13) and a third insulating sleeve (14);
the busbar (11) comprising a main body portion (111), an extending portion (112), and a bent connection portion (113), the bent connection portion (113) connecting the main body portion (111) and the extending portion (112);
the first insulating sleeve (12) covering the main body portion (111) of the busbar (11);
the second insulating sleeve (13) covering the extending portion (112) of the busbar (11);
the third insulating sleeve (14) comprising a first covering portion (141), and the first covering portion (141) covering the bent connection portion (113) of the busbar (11);
**characterized in that**
the first insulating sleeve (12), the second insulating sleeve (13) and the third insulating sleeve (14) each are a heat shrinkable tube; and
the first insulating sleeve (12), the second insulating sleeve (13) and the third insulating sleeve (14) are independent components.

2. The connecting assembly (1) according to claim 1, wherein the third insulating sleeve (14) is wholly located between the first insulating sleeve (12) and the second insulating sleeve (13).

3. The connecting assembly (1) according to claim 1, wherein the third insulating sleeve (14) further comprises a second covering portion (142), and the second covering portion (142) is connected to the first covering portion (141) and covers a part of the first insulating sleeve (12).

4. The connecting assembly (1) according to claim 1, wherein the third insulating sleeve (14) further comprises a third covering portion (143), and the third covering portion (143) is connected to the first covering portion (141) and covers a part of the second insulating sleeve (13).

5. The connecting assembly (1) according to claim 1, wherein
the extending portion (112) is formed as a rectangular structure;
correspondingly, the second insulating sleeve (13) is also formed as a rectangular structure, and the second insulating sleeve (13) covers a part of the extending portion (112).

6. The connecting assembly (1) according to claim 1, wherein
the extending portion (112) comprises a straight section (112A), a bent connection section (112B) and an extending section (112C), the straight section (112A) is connected to the bent connection portion (113), the bent connection section (112B) connects the straight section (112A) and the extending section (112C);
the second insulating sleeve (13) comprises a fourth covering portion (131) and a fifth covering portion (132), the fourth covering portion (131) covers the straight section (112A) of the extending portion (112), the fifth covering portion (132) covers the bent connection section (112B) of the extending portion (112).

7. The connecting assembly (1) according to claim 1, wherein the busbar (11) further comprises a connecting hole (114), and the connecting hole (114) is provided through the extending portion (112).

8. A battery pack, comprising a first battery module (2), a second battery module (3) and the connecting assembly (1) according to any one of claims 1 to 7, and the first battery module (2) being electrically connected to the second battery module (3) via the connecting assembly (1).

9. The battery pack according to claim 8, wherein
the first battery module (2) comprises a plurality of first batteries, a first output connecting piece (21) and a first end plate (22), and one end of the first output connecting piece (21) is electrically connected to the plurality of first batteries, the other end of the first output connecting piece (21) is supported on the first end plate (22) and electrically connected to the busbar (11);
the second battery module (3) comprises a plurality of second batteries, a second output connecting piece (31) and a second end plate (32), and one end of the second output connecting piece (31) is electrically connected to the plurality of second batteries, the other end of the second output connecting piece (31) is supported on the second end plate (32) and electrically connected to the busbar (11).

## Patentansprüche

1. Verbindungsanordnung (1), umfassend eine Stromschiene (11), eine erste Isolierhülle (12), eine zweite Isolierhülle (13) und eine dritte Isolierhülle (14);
wobei die Stromschiene (11) einen Hauptkörperabschnitt (111), einen Verlängerungsabschnitt (112) und einen gebogenen Verbindungsabschnitt (113) umfasst, wobei der gebogene Verbindungsabschnitt (113) den Hauptkörperabschnitt (111) und den Verlängerungsabschnitt (112) verbindet;
wobei die erste Isolierhülle (12) den Hauptkörperabschnitt (111) der Stromschiene (11) abdeckt;
wobei die zweite Isolierhülle (13) den Verlängerungsabschnitt (112) der Stromschiene (11) abdeckt;
wobei die dritte Isolierhülle (14) einen ersten Abdeckabschnitt (141) umfasst und der erste Abdeckabschnitt (141) den gebogenen Verbindungsabschnitt (113) der Stromschiene (11) abdeckt;
**dadurch gekennzeichnet, dass**
die erste Isolierhülle (12), die zweite Isolierhülle (13) und die dritte Isolierhülle (14) jeweils ein Warmschrumpfschlauch sind; und
die erste Isolierhülle (12), die zweite Isolierhülle (13) und die dritte Isolierhülle (14) eigenständige Komponenten sind.

2. Verbindungsanordnung (1) nach Anspruch 1, wobei sich die dritte Isolierhülle (14) vollständig zwischen der ersten Isolierhülle (12) und der zweiten Isolierhülle (13) befindet.

3. Verbindungsanordnung (1) nach Anspruch 1, wobei die dritte Isolierhülle (14) ferner einen zweiten Abdeckabschnitt (142) umfasst und der zweite Abdeckabschnitt (142) mit dem ersten Abdeckabschnitt (141) verbunden ist und einen Teil der ersten Isolierhülle (12) abdeckt.

4. Verbindungsanordnung (1) nach Anspruch 1, wobei die dritte Isolierhülle (14) ferner einen dritten Abdeckabschnitt (143) umfasst und der dritte Abdeckabschnitt (143) mit dem ersten Abdeckabschnitt (141) verbunden ist und einen Teil der zweiten Isolierhülle (13) abdeckt.

5. Verbindungsanordnung (1) nach Anspruch 1, wobei
der Verlängerungsabschnitt (112) als rechteckige Struktur gebildet ist;
wobei dementsprechend die zweite Isolierhülle (13) ebenfalls als rechteckige Struktur gebildet ist und die zweite Isolierhülle (13) einen Teil des Verlängerungsabschnitts (112) abdeckt.

6. Verbindungsanordnung (1) nach Anspruch 1, wobei
der Verlängerungsabschnitt (112) einen geraden Teilabschnitt (112A), einen gebogenen Verbindungsteilabschnitt (112B) und einen Verlängerungsteilabschnitt (112C) umfasst, der gerade Teilabschnitt (112A) mit dem gebogenen Verbindungsteilabschnitt (113) verbunden ist und der gebogene Verbindungsteilabschnitt (112B) den geraden Teilabschnitt (112A) und den Verlängerungsteilabschnitt (112C) verbindet;
wobei die zweite Isolierhülle (13) einen vierten Abdeckabschnitt (131) und einen fünften Abdeckabschnitt (132) umfasst, der vierte Abdeckabschnitt (131) den geraden Teilabschnitt (112A) des Verlängerungsabschnitts (112) abdeckt und der fünfte Abdeckabschnitt (132) den gebogenen Verbindungsteilabschnitt (112B) des Verlängerungsabschnitts (112) abdeckt.

7. Verbindungsanordnung (1) nach Anspruch 1, wobei die Stromschiene (11) ferner ein Verbindungsloch (114) umfasst und das Verbindungsloch (114) durch den Verlängerungsabschnitt (112) hindurch bereitgestellt ist.

8. Batteriesatz, umfassend ein erstes Batteriemodul (2), ein zweites Batteriemodul (3) und die Verbindungsanordnung (1) nach einem der Ansprüche 1 bis 7, und wobei das erste Batteriemodul (2) mittels der Verbindunganordnung (1) elektrisch mit dem zweiten Batteriemodul (3) verbunden ist.

9. Batteriesatz nach Anspruch 8, wobei
das erste Batteriemodul (2) eine Vielzahl von ersten Batterien, ein erstes Ausgangsverbindungsstück (21) und eine erste Endplatte (22) umfasst und ein Ende des ersten Ausgangsverbindungsstücks (21) elektrisch mit der Vielzahl von ersten Batterien verbunden ist und das andere Ende des ersten Ausgangsverbindungsstücks (21) auf der ersten Endplatte (22) getragen wird und elektrisch mit der Stromschiene (11) verbunden ist;
wobei das zweite Batteriemodul (3) eine Vielzahl von zweiten Batterien, ein zweites Ausgangsverbindungsstück (31) und eine zweite Endplatte (32) umfasst und ein Ende des zweiten Ausgangsverbindungsstücks (31) elektrisch mit der Vielzahl von zweiten Batterien verbunden ist und das andere Ende des zweiten Ausgangsverbindungsstücks (31) auf der zweiten Endplatte (32) getragen wird und elektrisch mit der Stromschiene (11) verbunden ist.

## Revendications

1. Ensemble de raccordement (1), comprenant une barre omnibus (11), un premier manchon d'isolation (12), un deuxième manchon d'isolation (13) et un troisième manchon d'isolation (14) ;
la barre omnibus (11) comprenant une partie corps principal (111), une partie d'extension (112), et une partie de raccordement coudée (113), la partie de raccordement coudée (113) raccordant la partie corps principal (111) et la partie d'extension (112) ;
le premier manchon d'isolation (12) couvrant la partie corps principal (111) de la barre omnibus (11) ;
le deuxième manchon d'isolation (13) couvrant la partie d'extension (112) de la barre omnibus (11) ;
le troisième manchon d'isolation (14) comprenant une première partie de recouvrement (141), et la première partie de recouvrement (141) couvrant la partie de raccordement coudée (113) de la barre omnibus (11) ;
**caractérisé en ce que**
le premier manchon d'isolation (12), le deuxième manchon d'isolation (13) et le troisième manchon d'isolation (14) sont chacun un tube thermorétractable ; et
le premier manchon d'isolation (12), le deuxième manchon d'isolation (13) et le troisième manchon d'isolation (14) sont des éléments indépendants.

2. Ensemble de raccordement (1) selon la revendication 1, dans lequel le troisième manchon d'isolation (14) se trouve entièrement entre le premier manchon d'isolation (12) et le deuxième manchon d'isolation (13).

3. Ensemble de raccordement (1) selon la revendication 1, dans lequel le troisième manchon d'isolation (14) comprend en outre une deuxième partie de recouvrement (142), et la deuxième partie de recouvrement (142) est raccordée à la première partie de recouvrement (141) et couvre une partie du premier manchon d'isolation (12).

4. Ensemble de raccordement (1) selon la revendication 1, dans lequel le troisième manchon d'isolation (14) comprend en outre une troisième partie de recouvrement (143), et la troisième partie de recouvrement (143) est raccordée à la première partie de recouvrement (141) et couvre une partie du deuxième manchon d'isolation (13).

5. Ensemble de raccordement (1) selon la revendication 1, dans lequel
la partie d'extension (112) est formée comme une structure rectangulaire ;
de manière correspondante, le deuxième manchon d'isolation (13) est également formé comme une structure rectangulaire, et le deuxième manchon d'isolation (13) couvre une partie de la partie d'extension (112).

6. Ensemble de raccordement (1) selon la revendication 1, dans lequel
la partie d'extension (112) comprend une section droite (112A), une section de raccordement coudée (112B) et une section d'extension (112C), la section droite (112A) est raccordée à la partie de raccordement coudée (113), la section de raccordement coudée (112B) raccorde la section droite (112A) et la section d'extension (112C) ;
le deuxième manchon d'isolation (13) comprend une quatrième partie de recouvrement (131) et une cinquième partie de recouvrement (132), la quatrième partie de recouvrement (131) couvre la section droite (112A) de la partie d'extension (112), la cinquième partie de recouvrement (132) couvre la section de raccordement coudée (112B) de la partie d'extension (112).

7. Ensemble de raccordement (1) selon la revendication 1, dans lequel la barre omnibus (11) comprend en outre un trou de raccordement (114), et le trou de raccordement (114) est formé à travers la partie d'extension (112).

8. Bloc-batterie, comprenant un premier module de batterie (2), un second module de batterie (3) et l'ensemble de raccordement (1) selon l'une quelconque des revendications 1 à 7, et le premier module de batterie (2) étant électriquement raccordé au second module de batterie (3) par l'intermédiaire de l'ensemble de raccordement (1).

9. Bloc-batterie selon la revendication 8, dans lequel
le premier module de batterie (2) comprend une pluralité de premières batteries, une première pièce de raccordement de sortie (21) et une première plaque d'extrémité (22), et une extrémité de la première pièce de raccordement de sortie (21) est électriquement raccordée à la pluralité de premières batteries, l'autre extrémité de la première pièce de raccordement de sortie (21) est supportée sur la première plaque d'extrémité (22) et électriquement raccordée à la barre omnibus (11) ;
le second module de batterie (3) comprend une pluralité de deuxièmes batteries, une deuxième pièce de raccordement de sortie (31) et une deuxième plaque d'extrémité (32), et une extrémité de la deuxième pièce de raccordement de sortie (31) est électriquement raccordée à la pluralité de deuxièmes batteries, l'autre extrémité de la deuxième pièce de raccordement de sortie (31) est supportée sur la deuxième plaque d'extrémité (32) et électriquement raccordée à la barre omnibus (11).
